# EUROPEAN PATENT SPECIFICATION

(11) **EP 2 242 307 B1**
(45) Date of publication and mention of the grant of the patent: **04.07.2012**
(21) Application number: 09360020.3
(22) Date of filing: 14.04.2009
(51) Int. Cl.: H04W 28/14

(54) **Controlling transmission of encoded data packets**
Steuerung der Übertragung von kodierten Datenpaketen
Contrôle de la transmission de paquets de données codés

(43) Date of publication of application: 20.10.2010
(73) Proprietor: Alcatel Lucent, 75007 Paris (FR)
(72) Inventor: Wang, Yalou, Swindon, SN5 5XN (GB)
(74) Representative: Sarup, David Alexander

(56) References cited:
- EP-A- 1 361 706
- WO-A-2009/038365
- WO-A-2009/045871

## Description

### FIELD OF THE INVENTION

The present invention relates to a base station operable to control transmission of encoded data packets, a method and computer program product.

### BACKGROUND

It is known to generate encoded data packets for transmission from a base station to user equipment. For example, it is known to receive data packet from a core network at the base station which are to be subjected to encoding in accordance with a packet data convergence protocol. These encoded data packets are then provided to a radio link controller for onward transmission to user equipment over an air interface. To account for variation in the data rate of the air interface between the base station and the user equipment, a buffer is provided within the radio link controller which holds the encoded data packets until the radio link controller is informed that a transmission scheduling opportunity over the air interface exists.

WO 2009/038365 discloses a method in which a user equipment processes data in a wireless mobile communications system. If a radio link controller layer has no new data to be transmitted, the radio link controller layer requests that a packet data packet data convergence protocol layer transfer new radio link controller service data units.

Whilst this approach enables encoded data packets to be transmitted to the user equipment, under some circumstances undesirable consequences arise.

Accordingly, it is desired to provide an improved technique for controlling the transmission of encoded data packets.

### SUMMARY

According to a first aspect, there is provided a base station operable to control transmission of encoded data packets as claimed in claim 1.

The first aspect recognises that a problem with storing encoded data packets within the radio link controller buffer is that if the air interface between the base station and the user equipment is unable to transmit these encoded data packets quickly enough during periods of overload (such as may occur due to a transient burst of packets or through a constantly high flow), then the radio link controller buffer will overflow quickly and constantly causing a loss of encoded data packets. This is a particular problem when ciphering is enabled which generates a hyper frame, and there is a restriction on the maximum number of consecutive lost encoded data packets such as, for example, half of the hyper frame size. If more than half of a hyper frame is lost, then synchronisation between the base station and user equipment will be lost causing a deciphering failure at the user equipment. One way to address this problem is to use inter-layer control messages between the radio link controller and the packet data convergent protocol logic to signal when radio link control buffer overflow occurs. However, a problem with this approach is that these control messages are processed by the control plane and so can be subject to long processing delays. This problem is compounded during periods of congestion (which often happens just when the overload becomes most severe) and so these control messages may take even longer to be processed. Hence, the overflow condition cannot be controlled quickly enough using that control message technique.

Accordingly, packet data convergence protocol logic is provided which receives data packets and generates encoded data packets. A radio link controller is provided which receives the encoded data packets for transmission onwards to the user equipment. The radio link controller has a buffer which stores the encoded data packets which have not yet been transmitted to the user equipment. The radio link controller has status logic which determines the status of the radio link controller buffer and transmits an indication of that status in a status indication packet which is transmitted to the packet data convergence protocol logic over a user plane in order to control the transmission of encoded data packets from the packet data convergence protocol logic to the radio link controller. By transmitting the status indication packet over the user plane, control of the transmission of encoded data packets from the packet data convergence protocol logic to the radio link controller can be effected much more quickly, thereby significantly reducing the degree of latency between the detection of the status of the radio link controller buffer and any transmission control which needs to occur as a consequence. It will be appreciated that this reduced latency is advantageous both where wishing to prevent transmission of further encoded data packets (and thereby avoid the loss of those data packets) or when wishing to resume the transmission of these data packets (and thereby avoid under utilisation of the air interface). Also, by minimising the use of the control plane, the effect on any congestion in that control plane is also minimised. It will be appreciated that the packet data convergence protocol logic may be operable to either decode and interpret the status encoded in the status indication packet itself or may effect control via a core processing application.

The status indication packet comprises a packet data convergence protocol status data packet encoding the status. Accordingly, the status indication packet may be encoded using a packet data convergence protocol status data packet. By using such a data packet, the status can be transmitted using existing infrastructure, within a base station, over an existing data path, in a rapid and reliable way.

In one embodiment, the status comprises one of at least three different states of the radio link controller buffer. Accordingly, the status indication packet is able to provide any one of three or more different states of the radio link control buffer. By providing more than two states, it will be appreciated that the likelihood of control fluctuations occurring due to rapid transition around a single threshold, and the stability fluctuations as a result of system reaction to those transitions is minimised.

In one embodiment, the three different states comprise: a low state where occupancy of the radio link controller buffer is less than and/or equal to a low threshold; a high state where occupancy of the radio link controller buffer is greater than and/or equal to a high threshold; and a medium state where occupancy of the radio link controller buffer is between the low and high threshold. Accordingly, the three states represent a low state, a high state and an intermediate medium state. The low state may indicate when the radio link control buffer occupancy is less than a lower threshold, including an empty buffer. The high state may indicate a radio link control buffer occupancy which is greater than a high threshold, including a buffer overflow state. The medium state may indicate that the radio link control buffer occupancy is between the lower threshold and the higher threshold. By setting the two thresholds and three different states, transitions between these states can be utilised to control the transmission of encoded data packets to the radio link controller to minimise rapid control changes.

In one embodiment, the status comprises, for the medium state, an indication of an immediately preceding state of the radio link controller buffer. By including an indication of an immediately preceding state when in the medium state, a decision can be made on whether a change in the transmission status of the packet data convergence protocol logic needs to be made or whether it may continue with the current regime, thereby once again avoiding unnecessary changes in the transmission status.

In one embodiment, the status logic is operable to transmit the status indication packet when it is determined that the radio link controller buffer has transitioned from the medium state to the high state and from the medium state to the low state. Accordingly, it is not necessary for the state of the radio link control buffer to be transmitted all the time. When the radio link controller buffer transitions from the medium state to the high state, this may indicate that the buffer is about to overflow. Likewise, when the radio link control buffer transitions from the medium state to the low state, this indicates that the radio link controller buffer is likely to underflow. Accordingly, on the occurrence on these two transitions, it may be necessary to change the current transition regime of the packet data convergence protocol logic but other transitions need not necessarily be indicated.

In one embodiment, the packet data convergence protocol logic comprises: a first buffer operable to store encoded data packets provided to the radio link controller; and a second buffer operable to store data packets yet to be transmitted to the radio link controller, the packet data convergence protocol logic being operable, in response to the status indication packet to control operation of the first and second buffers. Hence, a first buffer which stores any encoded data packets provided to the radio link controller is provided. In addition to this buffer a second buffer is provided which stores those data packets which have yet to be transmitted to the radio link controller. The packet data convergence protocol logic responds to the status indication packets to control the operation of these buffers and control the transmission of encoded data packets to the radio link controller.

In one embodiment, the packet data convergence protocol logic is operable, in response to receipt of the status indication packet indicating the radio link controller buffer being in the high state, to prevent encoded data packets being transmitted to the radio link controller and instead to store any untransmitted encoded data packets in the second buffer. Accordingly, when the radio link controller detects that the radio link controller buffer has transitioned from a medium state to a high state, a status indication packet is transmitted indicating that the radio link controller buffer is in the high state. The packet data convergence protocol logic responds by preventing any further encoded data packets from being transmitted to the radio link controller and instead stores data packets which have yet to be transmitted to the radio link controller in the second buffer. In this way, it can be seen that the radio link controller buffer which is about to overflow is prevented from receiving any further encoded data packet which, if they were transmitted to the radio link controller may cause the radio link controller buffer to overflow and result in lost data. The data packets are instead retained by the packet data convergence protocol logic and stored in the second buffer. In this way, the data can be still retained for subsequent transmission when the air interface is able to support the transmission of that data and the occupancy of the radio link controller buffer is lower.

In one embodiment, the packet data convergence protocol logic is operable, in response to receipt of the status indication packet indicating the radio link controller buffer being in the high state for greater than a predetermined period, to transmit a status enquiry packet to the radio link controller to determine the status of the radio link controller buffer. Accordingly, it the packet data convergence protocol logic detects that no transmission to the radio link controller has occurred for a predetermined period, a status enquiry packet is transmitted to the radio link controller. Being prevented from transmitted encoded data packets for an extended period may occur as a result of extensive congestion or may indicate that a status indication packet from the radio link controller may have been lost on the data path. Sending a status enquiry packet will help to detect the loss of a previous status indication packet and, will cause a transmission to occur may enable the in those circumstances provides an opportunity a further status indication packet to be transmitted which would not have otherwise occurred and enables normal operation to resume.

In one embodiment, the packet data convergence protocol logic is operable, when no response to the status enquiry packet is received for a further predetermined period, to transmit a further status enquiry packet to the radio link controller to determine the status of the radio link controller buffer. Accordingly, if no response to that status enquiry is received after another period of time, then a further status enquiry may be transmitted in order to have a further opportunity to receive a missing status indication packet. It will be appreciated that if no status indication packet is received for a considerable period of time, then an alarm condition may be triggered.

In one embodiment, the packet data convergence protocol logic is operable, when a response to the status enquiry packet is received indicating that the radio link controller buffer is in the medium state, to resume transmission of encoded data packets to the radio link controller when the indication of an immediately preceding state of the radio link controller buffer indicates that the immediately preceding state was the low state. Accordingly, should a status enquiry packet be received which indicates that the radio link controller buffer is in the medium state, transmission of the encoded data packet the radio link controller will recommence assuming the communication of the immediately preceding state indicates a low state. By determining that the immediately preceding state was a low state, some certainty can be provided that the radio link controller buffer has previously achieved a very low occupancy and is therefore less likely to rapidly achieve a high occupancy state. Should the status indication packet transmitted in response to the status enquiry packet indicate that the radio link controller buffer is in the medium state but the immediately preceding state was the high state, then the packet data convergence protocol logic continues to prevent transmission of the encoded data packets since it is likely that the radio link controller buffer is still relatively full and may rapidly reach a high occupancy state.

In one embodiment, wherein the packet data convergence protocol logic is operable, in response to receipt of the status indication packet indicating the radio link controller buffer being in the low state, to resume transmission of encoded data packets to the radio link controller. Accordingly, when the status indication packet indicates that the radio link control buffer is in the low state, transmission of encoded data packets should be resumed because the radio link controller buffer is nearing empty.

In one embodiment, the status indication packet encodes an indication of encoded data packets received by the user equipment. Accordingly, the status indication may indicate those encoded data packets which have been confirmed as being received by the user equipment. This enables the base station to make an assessment of those encoded data packets which are still pending receipt by the user equipment and which may be required should handover take place.

In one embodiment, the packet data convergence protocol logic is operable, in response to the indication of encoded data packets received by the user equipment, to delete those encoded data packets from the first buffer. Accordingly, the packet data convergence protocol logic uses the indication encoded in the status indication packet to delete those encoded data packets confirmed as being received by the user equipment from the first buffer. This enables the state of the first buffer to properly reflect those encoded data packets not received by the user equipment, which reduces the amount of encoded data packets which need to be transferred to another base station should handover occur and reduces the potential duplication of encoded data packets received by the user equipment following handover. According to a second aspect, there is provided a method of controlling transmission of encoded data packets, as claimed in claim 14.

In one embodiment, the status comprises one of at least three different states of the radio link controller buffer.

In one embodiment, the three different states comprise: a low state where occupancy of the radio link controller buffer is less than and/or equal to a low threshold; a high state where occupancy of the radio link controller buffer is greater than and/or equal to a high threshold; and a medium state where occupancy of the radio link controller buffer is between the low and high threshold.

In one embodiment, the status comprises, for the medium state, an indication of an immediately preceding state of the radio link controller buffer.

In one embodiment, the step of transmitting comprises transmitting the status indication packet when it is determined that the radio link controller buffer has transitioned from the medium state to the high state and from the medium state to the low state.

In one embodiment, the method comprises the steps of: storing encoded data packets provided to the radio link controller in a first buffer; storing data packets yet to be transmitted to the radio link controller in a second buffer; and controlling operation of the first and second buffers in response to the status indication packet.

In one embodiment, the method comprises the steps of: in response to receipt of the status indication packet indicating the radio link controller buffer being in the high state, preventing encoded data packets being transmitted to the radio link controller and instead to storing any untransmitted encoded data packets in the second buffer. In one embodiment, the method comprises the steps of: in response to receipt of the status indication packet indicating the radio link controller buffer being in the high state for greater than a predetermined period, transmitting a status enquiry packet to the radio link controller to determine the status of the radio link controller buffer.

In one embodiment, the method comprises the steps of: when no response to the status enquiry packet is received for a further predetermined period, transmitting a further status enquiry packet to the radio link controller to determine the status of the radio link controller buffer.

In one embodiment, the method comprises the steps of: when a response to the status enquiry packet is received indicating that the radio link controller buffer is in the medium state, resuming transmission of encoded data packets to the radio link controller when the indication of an immediately preceding state of the radio link controller buffer indicates that the immediately preceding state was the low state.

In one embodiment, the method comprises the steps of: in response to receipt of the status indication packet indicating the radio link controller buffer being in the low state, resuming transmission of encoded data packets to the radio link controller.

In one embodiment, the status indication packet encodes an indication of encoded data packets received by the user equipment.

In one embodiment, the method comprises the steps of: in response to the indication of encoded data packets received by the user equipment, deleting those encoded data packets from the first buffer.

According to a third aspect, there is provided a computer program product operable, when executed on a computer, to perform the method steps of the second aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 shows an example deployment of base stations in a wireless communications network according to one embodiment;
Figure 2 is a state diagram illustrating state transitions of a radio link controller buffer shown in Figure 1;
Figures 3 and 4 show packet data convergence protocol status data packets arranged as the status indication; and
Figure 5 shows bit field encoding of the packet data convergence protocol status data packets when encoding different radio link controller buffer states.

### DESCRIPTION OF THE EMBODIMENTS

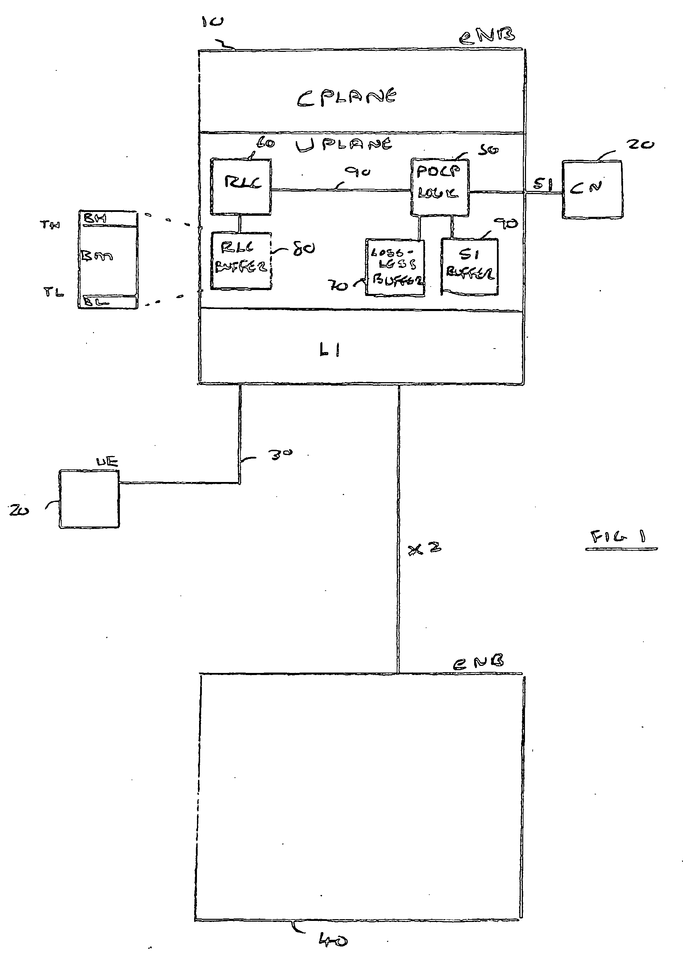

Figure 1 illustrates an arrangement of an example base station according to one embodiment. The base station, generally 10, is coupled via a communications link S1 with the core network 20. The base station 10 communicates with user equipment 20 via an air interface 30. The base station 10 also communicates with other base stations, such as the base station 40, when performing handover via a communications link X2.

The base station 10 comprises a number of different layers such as, for example, a L1 layer, a user plane layer, and a control plane layer. The user plane layer is coupled with the core network 21 via the S1 link and receives downlink (DL) data packets at packet data convergence protocol (PDCP) logic 50 for encoding into an encrypted PDCP hyper frame, which is transmitted as PDCP data packets (PDUs) to a radio link controller (RLC) 60 via a data path in the user plane. The radio link controller 60 then provides the PDCP PDUs over the air interface 30 via the L1 layer to the user equipment 20. As will be mentioned in more detail below, both the PDCP logic 50 and radio link controller 60 have buffers associated therewith to help prevent data packets from being lost when the rate of incoming DL data packets from the core network 20 exceeds the sustainable air interface 30 rate.

When encryption is enabled, there is a restriction on the maximum number of consecutive lost PDCP PDUs which is half of the hyper frame size. Each hyper frame is identified by a hyper frame number; the frame size is 128 data packets when the PDCP sequence number (SN) is seven bits, and 4096 data units when the PDCP SN is twelve bits. If the number of consecutive lost PDCP PDUs is more than half of a hyper frame, the hyper frame number will become desynchronised between the user equipment 20 and the base station 10, resulting in a decryption failure. Accordingly, it is necessary to prevent such loss of PDCP PDUs from occurring.

When operating under ideal conditions DL data packets are received from the core network over the communications link S1 at the PDCP logic 50. The PDCP logic 50 encodes those data packets as DL PDCP PDUs and transmits these over the user plane to the radio link controller 60. A copy of each PDCP PDU transmitted to the radio link controller 60 is stored in the lossless buffer 70 for subsequent use in handover, if required. The radio link controller 60 transmits the received DL PDCP PDUs via the L1 layer to the air interface 30 and on to the user equipment 20. Because the radio link controller 60 will be unable to access the air interface 30 on demand, a RLC buffer 80 is provided which holds the DL PDCP PDUs until the L1 layer signals that a transmission scheduling opportunity exists and transmission can occur over the air interface 30 to the user equipment 20. Assuming that no significant delay exists in the processing by the PDCP logic 50, the received DL data packets will be buffered in the RLC buffer 80 waiting to be scheduled at the rate at which they are received from the core network 20. If the core network 20 has a large transient burst of DL data packets or a constantly high rate which exceeds the sustainable rate over the air interface 30, the RLC buffer 80 will quickly fill and overflow, often constantly, causing a large loss of DL PDCP PDUs. Should the number of lost PDCP PDUs exceed half the size of a hyper frame, then an encryption failure will occur.

Accordingly, it is necessary to provide a mechanism to stop the PDCP logic 50 from transmitting any more DL PDCP PDUs when the RLC buffer 80 is overflowing, and to resume transmission of the DL PDCP PDUs when they can be received by the RLC buffer 80 without risking overflow and loss.

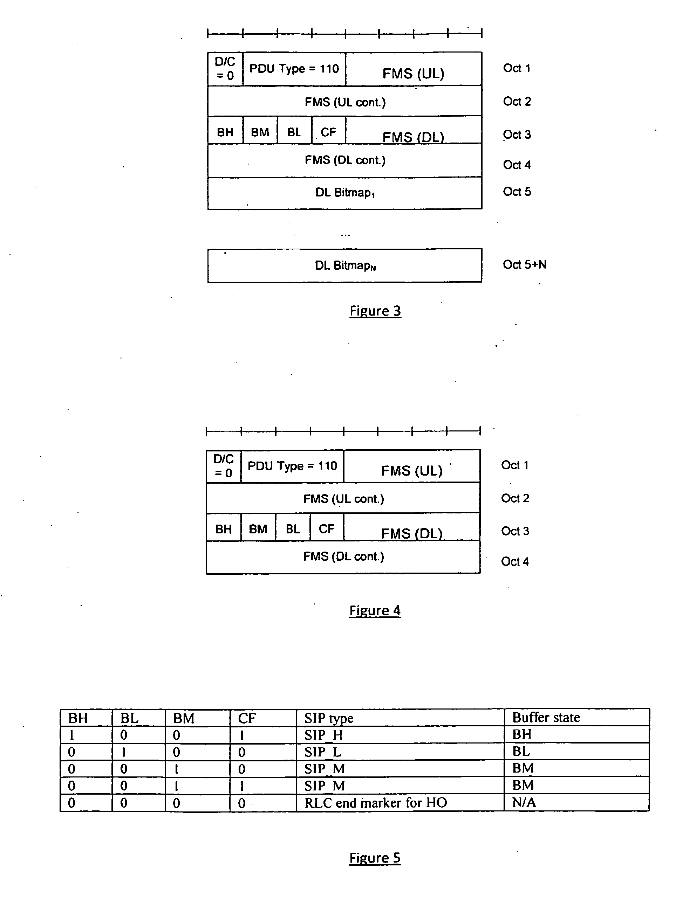

As will be explained in more detail below, such control is achieved through the provision of a status indication packet which is transmitted directly between the radio link controller 60 and the PDCP logic 50 over the data path 90 within the user plane. This avoids the need to send control messages via the control plane, which may introduce unacceptable delays, particularly when congestion occurs. To enable such status indication packets to be transmitted over the data path 90, an existing message structure currently used to transmit information on lost data packets which were not received by the user equipment is utilised, and four bits previously not employed in those messages are encoded to provide RLC buffer status information to the PDCP logic 50, as will be described in more detail with reference to Figures 3 to 5 below. The PDCP logic 50 is operable to decode these status indication packets either directly or via core processing applications and respond accordingly. As mentioned above, the status indication packets are compatible with the format for existing message, an RLC last packet indicator (also known as an RLC end marker). Additionally, the state indication packet not only provides details of the status of the RLC buffer 80, but also provides an indication of which DL PDCP PDUs have been successfully received by the user equipment 20, with combined uplink and downlink information. This enables the PDCP logic 50, in addition to controlling the transmission of PDCP PDUs, to also perform selective discarding of PDCP PDUs stored in the lossless buffer 70 (which would only normally be possible on handover).

On receipt of a status indication packet indicating that the PDCP logic 50 should temporarily refrain from transmitting any further DL PDCP PDUs to the radio link controller 60 because the RLC buffer 80 risks overflowing, the PDCP logic 50 will instead store the PDCP PDUs in the S1 buffer 90. Once the radio link controller 60 determines that the RLC buffer 80 is once again able to receive PDCP PDUs, a status indication packet will be transmitted to the PDCP logic 50 and the PDCP logic 50 will begin emptying the S1 buffer 90 and transmitting the PDCP PDUs stored therein to the radio logic controller 60.

To help prevent a so-called "ping pong" effect occurring where frequent status indication packets are transmitted to cause the PDCP logic 50 rapidly alternate between being prevented from transmitting data and then being allowed to transmit data, a three state, two threshold implementation is used in the management of the RLC buffer 80.

As shown in Figure 1, the RLC buffer 80 has a lower threshold TL and an upper threshold TH. The lower threshold TL is set at, for example, thirty percent of the buffer total capacity, whilst the upper threshold TH is set at, for example, 90 percent of the buffer total capacity. The low state BL is defined where the buffer occupancy is less than the lower threshold TL and includes when the buffer is empty. The high state BH is when the buffer occupancy is higher than the upper threshold TH and includes when the buffer is overflowing. The medium state BM is when the buffer occupancy is between the lower threshold TL and the higher threshold TH.

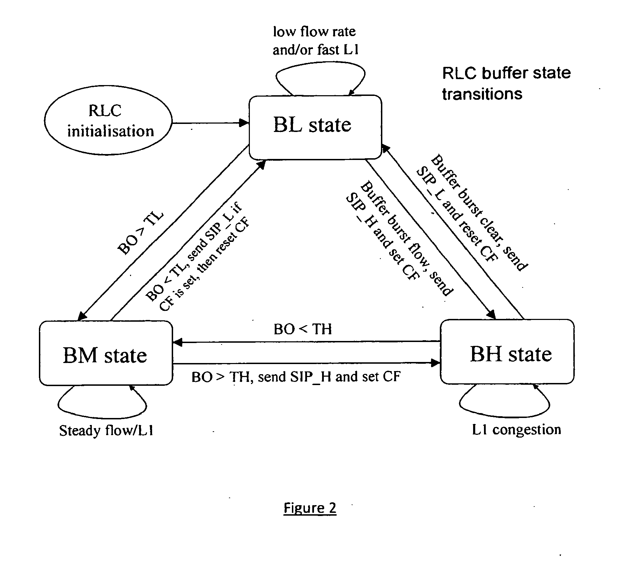

Figure 2 shows the RLC buffer 80 state transitions and status indication packet contents when transitioning between states. The RLC buffer 80 will be in the low state 8L and will remain there if there is a low rate of receipt of DL PDCP PDUs and/or a fast air interface 30. As the occupancy of the RLC buffer 80 grows and passes the lower threshold TL, the state transitions to the medium state BM, but no status indication packet is yet sent to the PDCP logic 50 since there is little risk of any overflow occurring yet. Should the occupancy of the RLC buffer 80 continue to increase and exceed the higher threshold TH, the state transitions to a high state BH and a status indication packet which indicates that the buffer state is high is sent with a congestion flag CF set. As the RLC buffer 80 empties to below the higher threshold TH, the buffer transitions to the medium state BM but no status indication packet is transmitted because the emptying of the RLC buffer 80 may only be transient. As the RLC buffer 80 continues to empty to below the lower threshold TL, a status indication packet is sent indicating the RLC buffer 80 is now in the low state BL if the congestion flag is set (which indicates that the buffer had been previously in the high state BH and therefore the PDCP logic 50 will have been prevented from sending any further PDCP PDUs) and the congestion flag CF is cleared. If the congestion flag CF was not set, then this indicates that the buffer state has not previously been high and so there is no need to send a status indication packet to the PDCP logic 50 because it will not have been prevented from making any DL PDCP PDU transmissions.

Should the RLC buffer 80 be in the low state BL and then receive a rapid burst of PDCP PDUs which causes it to transition quickly to the high state BH, then a status indication packet is sent indicating that the RLC buffer 80 is in the high state BH and the congestion flag CF is set which causes the PDCP logic 50 to stop sending any further PDCP PDUs. Should the occupancy of the RLC buffer 80 reduced rapidly to the low state BL then a status indication packet is sent to the PDCP logic 50 indicating the RLC buffer 80 is in the low state BL and the congestion flag CF is cleared indicating that the PDCP logic 50 should resume transmission.

As shown in Figures 3 and 4, the status indication packet is encoded as a modified RLC end marker and contains both uplink and downlink PDCP sequence number information. There are two types of such packets, one is designed for radio bearers in a radio link controller acknowledgement mode, as shown in Figure 3, the other is for radio bearers in a radio link controller unacknowledged mode. By causing the status indication packet to be compatible with the RLC end marker format (which is also intended to be compatible with PDCP status PDUs), the processing complexity required in the PDCP logic 50 is reduced. The fields of the status indication packets are as follows:-
DC: data or control flag used by PDCP PDUs. For a status indication packet it is always set to zero.
PDU type: this is a special PDU type code (110) used to distinguish the status indication packet from the normal PDCP status PDU.
FMS (first missing sequence): the next end-sequence PDCP data PDU SN expected to be acknowledged by the user equipment 20. For radio bearers on unacknowledged modes, this indicates the FMS on the radio link controller side (not acknowledgment status).
Bitmap: this indicates the position of acknowledged and non-acknowledged PDCP SNs after the FMS. "1" means the corresponding PDU has been received by the user equipment 20; "0" means it has not been received. This field applies to radio bearers on acknowledgment mode only.

As mentioned above, the status indication packet also uses four previously reserved bits. If these bits are all set to "0", then this indicates a normal RLC end marker. If any of the four bits is non-zero, this indicates a status indication packet.

The four bits are set as follows:
BH: RLC buffer 80 occupancy is high, which signals congestion.
BM: RLC buffer 80 occupancy is medium.
BL: RLC buffer 80 occupancy is low.
CF: the radio link controller congestion state flag, which reflects the state of this flag within the radio link controller 60.

Figure 5 shows in more detail all possible bit settings for these four fields including status indicator packet type and RLC buffer 80 states. As can be seen, whilst the CF bit is fixed with the BH or BL states, this bit can be set to either "0" or "1" for the BM state depending on the previous state of the RLC buffer 80 as reflected by the CF flag within the radio link controller 60. As will be explained in more detail below, this additional information on the previous state of the RLC buffer 80 may be utilised when state packets are lost and retransmitted.

In order that the radio link controller 60 can monitor the state of the RLC buffer 80 and construct the status indication packet when required, it performs the following functions. In order to assemble the status indication packet, the radio link controller 60 needs to keep track of PDCP sequence numbers. To do this tracking, the radio link controller 60 reads the PDCP PDU header and extracts the sequence number field. The radio link controller 60 then maintains an internal tracking table for the following three variables:
UL FMS: for radio bearers on acknowledgment mode, the radio link controller 60 records the UL FMS (the next in-sequence PDCP PDU sequence number to be received from the user equipment 20) and updates it constantly. For radio bearers on unacknowledgment mode, this field may be set to all zeros as it is not used by PDCP.
DL FMS: the radio link controller 60 records the DL FMS (the next in-sequence PDCP PDU sequence number expected to be acknowledged by the user equipment 20) and updates it constantly. For radio bearers on acknowledgment mode, this DL FMS points to the first gap that the base station 10 has not received an acknowledgement for from the user equipment 20. Before this FMS, the base station 10 will have received acknowledgments from the user equipment 20 indicating all the proceeding PDCP PDUs have been received correctly by that user equipment 20. Whenever the radio link controller 60 receives a RLC status PDU which contains the user equipment acknowledgment status, it will update this variable. For radio bearers on unacknowledgment mode, the DL FMS points to the first DL PDCP PDU in the RLC buffer 80 that is still waiting for transmission over the air interface 30.
DL bit map: the radio link controller 60 records the DL bit.map (the previously acknowledged PDCP PDUs after FMS PDCP PDU). This record is for radio bearers on acknowledgement mode only. In the bit map, a "1" means that the corresponding PDCP PDU has been acknowledged by the user equipment 20; "0" means that no acknowledgement has been received. The bit map needs only last to the largest acknowledged PDCP PDU. So the last bit of the bit map will always be "1". However, since the bit map is byte aligned, padding zeros may be needed after this. Whenever the radio link controller 60 receives a RLC status PDU which contains the user equipment acknowledgement status, it will update this variable.

To control DL transmissions from the PDCP logic 50, the radio link controller 60 will send the relevant status indication packet along the data path (in uplink) to the PDCP logic 50 when needed, as illustrated in Figure 2. As mentioned above, when the radio link controller 60 is first initialised, it will enter the low state BL with an empty RLC buffer 80. It will maintain the CF flag as a state variable which is initially set at "0". After this, when the PDCP logic 50 transmits the PDCP PDUs, the occupancy in the RLC buffer 80 builds up gradually. Depending on the L1 layer flow draining rates it will either stay in this state or transition to a medium state BM when the RLC buffer 80 occupancy exceeds the lower threshold TL. In an ideal situation, if the downlink PDCP PDU flow and the L1 layer flow can reach a steady matching state, the RLC buffer 80 will stay in either the lower BL or medium BM state, with CF set to "0". These transitions will not trigger any status indication packets to be sent to the PDCP logic 50. When the DL PDCP PDU flow rate is high, the RLC buffer 80 may enter the high state BH if the occupancy exceeds the higher threshold TH. On this transition, the radio link controller 60 will send a status indication message to the PDCP logic 50 to cause it to stop downlink flow. It will also set the congestion flag CF to "1". When the RLC buffer 80 occupancy reduces and goes back to the medium state BM, no status indication message will be triggered and the congestion flag CF will remain set at "1". In this way, the ping pong effects mentioned above can be avoided. If the occupancy reduces and the radio link controller 60 instead immediately signalled the PDCP logic 50 to resume transmission, there will be a risk of a large burst of DL PDCP PDU flow and the RLC buffer 80 may be filled up again quickly. If there is a processing delay between the status indication packet being sent by the radio link controller 60 and this being acted upon by the PDCP logic 50, then the RLC buffer 80 may go into overflow, causing packet loss. The use of two thresholds provides much more flexibility for parameter optimisation to adapt to the flow characteristic experience. When the RLC buffer 80 occupancy drops below the lower threshold TL, it will trigger a status indication packet which causes the PDCP logic 50 to resume DL PDCP PDU flow. The congestion flag CF is now reset. In this way, it can be seen that the RLC buffer 80 has a lower risk of either being under filled or overflowing.

Since the RLC buffer 80 state will be monitored on a timed interval basis, it is possible in rare situations that the state will transition rapidly between the lower BL and higher BH state if the flow rate is very volatile and/or the two thresholds TH, TL are near to each other. This situation can also occur if a status indication packet is lost in the data path between the radio link controller 60 and the PDCP logic 50. When these transitions occur, the radio link controller 60 will trigger a status indication packet indicating the RLC buffer 80 is in the high state and set CF high; likewise the radio link controller 60 will initiate a status indication packet indicating the RLC buffer 80 is the low state BL and reset CF when it goes back to the low state BL.

On receipt of status indication packets, the PDCP logic 50 takes the following actions to perform DL PDCP PDU flow control, as well as buffer control to minimise data loss. These actions can be performed by the PDCP logic 50 data path processing so as to speed up the flow control reaction. Alternatively, these actions may be performed by the PDCP control layer which interprets the status indication packet and controls the data path. When a status indication packet is received indicating that the RLC buffer 80 status is high BH, the PDCP logic 50 will pause DL PDCP PDU processing and accumulate all the new DL data packets in the S1 buffer 90. The S1 buffer 90 is a separate buffer from the lossless buffer 70 which holds the DL PDCP PDUs already sent to the radio link controller 60 (for the purposes of facilitating lossless handover to another base station). On receipt of the status indication packet, the PDCP logic 50 will start a timer (not shown). When a status indication packet is received indicating the RLC buffer 80 is in the low state BL, the PDCP logic 50 will resume the normal DL PDCP PDU processing, transmit those DL PDCP PDUs to the radio link controller 60 and stop the timer.

If the PDCP logic 50 is in the paused state and the timer expires, this indicates that the radio link controller 60 is still in a congested state or that a status indication packet has been lost on the data path. The PDCP logic 50 therefore sends a status enquiry packet to the radio link controller 60. This causes the radio link controller 60 to send a status indication packet. The response by the PDCP logic 50 will depend on the content of the status indication packet. If the status indication packet indicates the RLC buffer 80 is in the high state BH, it will keep waiting and restart the timer. If the status indication packet indicates that the RLC buffer 80 is in the medium state BM, with CF set, it will keep waiting and re-start the timer. If the status indication packet indicates that the RLC buffer 80 is in the low state BL, it will resume normal DL PDCP PDU processing. If the status indication packet indicates that the RLC buffer 80 is in the medium state BM, with CF cleared, it will resume normal DL PDCP PDU processing since this may indicate that a previous status indication message was lost on the data path. If no status indication message is received, then the PDCP logic 50 will repeat the status enquiry packet again and if no reply is received, then it may trigger an alarm.

As mentioned above, for radio bearers on acknowledgment mode, the PDCP logic 50 uses the FMS and bitmap contained within the status indication message to discard PDCP PDUs from the lossless buffer 70 to keep the probability of the lossless buffer 70 overflowing to a minimum. The discard can be applied whenever a status indication packet is received or only on the receipt of some status indication packets. For radio bearers on un-acknowledged mode, this discard is an option as the lossless buffer 70 for the radio bearers on un-acknowledgement mode is optional. If used, the lossless buffer 70 can discard all packets leading to the indicated downlink FMS.

It should also be noted that with regard to the S1 buffer 90 it does not matter if this buffer overflows and packets are lost here because this is outside the PDCP radio link controller layer and will have no impact on the hyper frame number.

Hence, it can be seen that by transmitting the status indication packet over the user plane, control of the transmission of encoded data packets from the packet data convergence protocol logic to the radio link controller can be effected much more quickly, thereby significantly reducing the degree of latency between the detection of the status of the radio link controller buffer and any transmission control which needs to occur as a consequence.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention as defined by the claims. It will thus be appreciated that those skilled in the art will be able to devise various arrangements that, although not explicitly described or shown herein, embody the principles of the invention as defined by the claims and are included within its scope. Furthermore, all examples recited herein are principally intended expressly to be only for pedagogical purposes to aid the reader in understanding the principles of the invention as defined by the claims and the concepts contributed by the inventor(s) to furthering the art, and are to be construed as being without limitation to such specifically recited examples and conditions.

## Claims

1. A base station (10) operable to control transmission of encoded data packets, said base station comprising:
packet data convergence protocol logic (50) operable to receive data packets and generate encoded data packets;
a radio link controller (60) operable to receive said encoded data packets from said packet data convergence protocol logic for transmission to user equipment (20), said radio link controller comprising:
a radio link controller buffer (80) operable to store those encoded data packets received from said packet data convergence protocol logic which have yet to be transmitted to said user equipment; and
status logic operable to determine a status of said radio link controller buffer and to transmit an indication of said status in a status indication packet transmitted to said packet data convergence protocol logic over a user plane (UPLANE) to control transmission of said encoded data packets to said radio link controller, wherein said status indication packet comprises a packet data convergence protocol status data packet encoding said status.

2. The base station of claim 1, wherein said status comprises one of at least three different states of said radio link controller buffer.

3. The base station of claim 2, wherein said three different states comprise: a low state (BL) where occupancy of said radio link controller buffer is less than and/or equal to a low threshold (TL); a high state (BH) where occupancy of said radio link controller buffer is greater than and/or equal to a high threshold (TH); and a medium state (BM) where occupancy of said radio link controller buffer is between said low and high threshold.

4. The base station of claim 3, wherein said status comprises, for said medium state, an indication of an immediately preceding state of said radio link controller buffer.

5. The base station of claim 3 or 4, wherein said status logic is operable to transmit said status indication packet when it is determined that said radio link controller buffer has transitioned from said medium state to said high state and from said medium state to said low state.

6. The base station of any preceding claim, wherein said packet data convergence protocol logic comprises:
a first buffer (70) operable to store encoded data packets provided to said radio link controller; and
a second buffer (90) operable to store data packets yet to be transmitted to said radio link controller, said packet data convergence protocol logic being operable, in response to said status indication packet to control operation of said first and second buffers.

7. The base station of claim 6, wherein said packet data convergence protocol logic is operable, in response to receipt of said status indication packet indicating said radio link controller buffer being in said high state, to prevent encoded data packets being transmitted to said radio link controller and instead to store any untransmitted encoded data packets in said second buffer.

8. The base station of claim 7, wherein said packet data convergence protocol logic is operable, in response to receipt of said status indication packet indicating said radio link controller buffer being in said high state for greater than a predetermined period, to transmit a status enquiry packet to said radio link controller to determine said status of said radio link controller buffer.

9. The base station of claim 8, wherein said packet data convergence protocol logic is operable, when no response to said status enquiry packet is received for a further predetermined period, to transmit a further status enquiry packet to said radio link controller to determine said status of said radio link controller buffer.

10. The base station of claim 8, wherein said packet data convergence protocol logic is operable, when a response to said status enquiry packet is received indicating that said radio link controller buffer is in said medium state, to resume transmission of encoded data packets to said radio link controller when said indication of an immediately preceding state of said radio link controller buffer indicates that said immediately preceding state was said low state.

11. The base station of claim 5, wherein said packet data convergence protocol logic is operable, in response to receipt of said status indication packet indicating said radio link controller buffer being in said low state, to resume transmission of encoded data packets to said radio link controller.

12. The base station of any preceding claim, wherein said status indication packet encodes an indication of encoded data packets received by said user equipment.

13. The base station of claim 12, wherein said packet data convergence protocol logic is operable, in response to said indication of encoded data packets received by said user equipment, to delete those encoded data packets from said first buffer.

14. A method of controlling transmission of encoded data packets, said method comprising the steps of:
receiving data packets and generating encoded data packets;
receiving said encoded data packets for transmission to user equipment (20);
storing in a radio link controller buffer (60) those encoded data packets received which have yet to be transmitted to said user equipment; and
determining a status of said radio link controller buffer and transmitting an indication of said status in a status indication packet over a user plane (UPLANE) to control transmission of said encoded data packets, wherein said status indication packet comprises a packet data convergence protocol status data packet encoding said status.

15. A computer program product operable, when executed on a computer, to perform the method steps of claim 14.

## Patentansprüche

1. Basisstation (10), betreibbar, um die Übertragung von codierten Datenpaketen zu steuern, wobei die besagte Basisstation umfasst:
Paketdatenkonvergenz-Protokolllogik (50), betreibbar für den Empfang von Datenpaketen und die Erzeugung von codierten Datenpaketen;
einen Funkverbindungs-Controller (60), betreibbar für den Empfang der besagten codierten Datenpakete von der besagten Paketdatenkonvergenz-Protokolllogik zur Übertragung an ein Benutzerendgerät (20), wobei der besagte Funkverbindungs-Controller umfasst:
Einen Funkverbindungs-Controller-Puffer (80), betreibbar für das Speichern derjenigen von der besagten Paketdatenkonvergenz-Protokolllogik empfangenen codierten Datenpakete, welche noch an das besagte Benutzerendgerät zu übertragen sind; und
Statuslogik, betreibbar für das Ermitteln eines Status des besagten Funkverbindungs-Controller-Puffers und für das Übertragen einer Angabe des besagten Status in einem an die besagte Paketdatenkonvergenz-Protokolllogik über eine Nutzerebene (UPLANE) übertragenen Statusangabepaket, um die Übertragung des besagten codierten Datenpakets an den besagten Funkverbindungs-Controller zu steuern, wobei das besagte Statusangabepaket ein Paketdatenkonvergenzprotokoll-Statusdatenpaket, welches den besagten Status codiert, umfasst.

2. Basisstation nach Anspruch 1, wobei der besagte Status einen von mindestens drei verschiedenen Zuständen des besagten Funkverbindungs-Controller-Puffers umfasst.

3. Basisstation nach Anspruch 2, wobei die besagten drei verschiedenen Zustände umfassen: Einen niedrigen Zustand (BL), in welchem die Belegung des besagten Funkverbindungs-Controller-Puffers niedriger als ein und/oder gleich einem niedrigen Grenzwert (TL) ist, einen hohen Zustand (BH), in welchem die Belegung des besagten Funkverbindungs-Controller-Puffers höher als ein und/oder gleich einem hohen Grenzwert (TH) ist; und einen mittleren Zustand (BM), in welchem die Belegung des besagten Funkverbindungs-Controller-Puffers zwischen dem besagten niedrigen und dem besagten hohen Grenzwert liegt.

4. Basisstation nach Anspruch 3, wobei der besagte Status für den besagten mittleren Zustand eine Angabe in Bezug auf einen unmittelbar vorhergehenden Zustand des besagten Funkverbindungs-Controller-Puffers umfasst.

5. Basisstation nach Anspruch 3 oder 4, wobei die besagte Statuslogik betreibbar ist, um das besagte Statusangabepaket zu übertragen, wenn ermittelt wird, dass der besagte Funkverbindungs-Controller-Puffer von dem besagten mittleren Zustand in den besagten hohen Zustand und von dem besagten mittleren Zustand in den besagten niedrigen Zustand übergegangen ist.

6. Basisstation nach einem beliebigen der vorstehenden Ansprüche, wobei die besagte Paketdatenkonvergenz-Protokolllogik umfasst:
Einen ersten Puffer (70), betreibbar für das Speichern von an den besagten Funkverbindungs-Controller bereitgestellten codierten Datenpaketen; und
einen zweiten Puffer (90), betreibbar für das Speichern von noch an den besagten Funkverbindungs-Controller zu übertragenden Datenpaketen, wobei die besagte Paketdatenkonvergenz-Protokolllogik betreibbar ist, um in Reaktion auf das besagte Statusangabepaket den Betrieb des besagten ersten und des besagten zweiten Puffers zu steuern.

7. Basisstation nach Anspruch 6, wobei die besagte Paketdatenkonvergenz-Protokolllogik betreibbar ist, um in Reaktion auf den Empfang des besagten Statusangabepakets, welches angibt, dass sich der besagte Funkverbindungs-Controller-Puffer in dem besagten hohen Zustand befindet, zu verhindern, dass codierte Datenpakete an den besagten Funkverbindungs-Controller übertragen werden und anstelle dessen alle nicht übertragenen codierten Datenpakete in dem besagten zweiten Puffer zu speichern.

8. Basisstation nach Anspruch 7, wobei die besagte Paketdatenkonvergenz-Protokolllogik betreibbar ist, um in Reaktion auf den Empfang des besagten Statusangabepakets, welches angibt, dass sich der besagte Funkverbindungs-Controller-Puffer für länger als eine vorgegebene Zeitspanne in dem besagten hohen Zustand befindet, ein Statusabfragepaket an den besagten Funkverbindungs-Controller zu übertragen, um den besagten Status des besagten Funkverbindungs-Controller-Puffers zu ermitteln.

9. Basisstation nach Anspruch 8, wobei die besagte Paketdatenkonvergenz-Protokolllogik betreibbar ist, um, wenn auf das besagte Statusabfragepaket keine Antwort für eine weitere vorgegebene Zeitspanne empfangen wird, ein weiteres Statusabfragepaket an den besagten Funkverbindungs-Controller zu übertragen, um den besagten Status des besagten Funkverbindungs-Controller-Puffers zu ermitteln.

10. Basisstation nach Anspruch 8, wobei die besagte Paketdatenkonvergenz-Protokolllogik betreibbar ist, um, wenn auf das besagte Statusabfragepaket eine Antwort empfangen wird, welche angibt, dass sich der besagte Funkverbindungs-Controller-Puffer in dem besagten mittleren Zustand befindet, die Übertragung von codierten Datenpaketen an den besagten Funkverbindungs-Controller fortzusetzen, wenn die besagte Angabe eines unmittelbar vorhergehenden Zustands des besagten Funkverbindungs-Controller-Puffers angibt, dass der besagte unmittelbar vorhergehende Zustand der besagte niedrige Zustand war.

11. Basisstation nach Anspruch 5, wobei die besagte Paketdatenkonvergenz-Protokolllogik betreibbar ist, um in Reaktion auf den Empfang des besagten Statusangabepakets, welches angibt, dass sich der besagte Funkverbindungs-Controller-Puffer in dem besagten niedrigen Zustand befindet, die Übertragung von codierten Datenpaketen an den besagten Funkverbindungs-Controller fortzusetzen.

12. Basisstation nach einem beliebigen der vorstehenden Ansprüche, wobei das besagte Statusangabepaket eine Angabe von an dem besagten Benutzerendgerät empfangenen codierten Datenpaketen codiert.

13. Basisstation nach Anspruch 12, wobei die besagte Paketdatenkonvergenz-Protokolllogik betreibbar ist, um in Reaktion auf die besagte Angabe von an dem besagten Benutzerendgerät empfangenen codierten Datenpaketen diejenigen codierten Datenpakete, die von dem besagten ersten Puffer empfangen werden, zu löschen.

14. Verfahren zur Steuerung der Übertragung von codierten Datenpaketen, wobei das besagte Verfahren die folgenden Schritte umfasst:
Empfangen von Datenpaketen und Erzeugen von codierten Datenpaketen;
Empfangen der besagten codierten Datenpakete für die Übertragung an das Benutzerendgerät (20);
Speichern derjenigen empfangenen codierten Datenpakete, die noch an das besagte Benutzerendgerät zu übertragen sind, in einem Funkverbindungs-Controller-Puffer (60); und
Ermitteln eines Status des besagten Funkverbindungs-Controller-Puffers, und Übertragen einer Angabe in Bezug auf den besagten Status in einem Statusangabepaket über eine Nutzerebene (UPLANE), um die Übertragung der besagten codierten Datenpakete zu steuern, wobei das besagte Statusangabepaket ein Paketdatenkonvergenzprotokoll-Statusdatenpaket, welches den besagten Status codiert, umfasst.

15. Computerprogramm-Produkt, betreibbar, um bei dessen Ausführung auf einem Computer die Verfahrensschritte gemäß Anspruch 14 durchzuführen.

## Revendications

1. Station de base (10) permettant de commander la transmission de paquets de données codés, ladite station de base comprenant :
une logique de protocole de convergence de données en paquet (50) permettant de recevoir des paquets de données et de générer des paquets de données codés ;
un dispositif de commande de liaison radio (60) permettant de recevoir lesdits paquets de données codés à partir de ladite logique de protocole de convergence de données en paquet à transmettre à l'équipement utilisateur (20), ledit dispositif de commande de liaison radio comprenant :
une mémoire tampon de dispositif de commande de liaison radio (80) permettant de stocker ces paquets de données codés provenant de ladite logique de protocole de convergence de données en paquet qui restent à transmettre audit équipement utilisateur ; et
une logique d'état permettant de déterminer un état de ladite mémoire tampon de dispositif de commande de liaison radio et de transmettre une indication dudit état dans un paquet d'indication d'état transmis à ladite logique de protocole de convergence de données en paquet sur un plan d'utilisateur (UPLANE) pour commander la transmission desdits paquets de données codés vers ledit dispositif de commande de liaison radio, dans laquelle ledit paquet d'indication d'état comprend un paquet de données d'état de protocole de convergence de données en paquet codant ledit état.

2. Station de base selon la revendication 1, dans lequel ledit état comprend un état parmi au moins trois états différents de ladite mémoire tampon de dispositif de commande de liaison radio.

3. Station de base selon la revendication 2, dans laquelle lesdits trois états différents comprennent : un état bas (BL) dans lequel l'occupation de ladite mémoire tampon de dispositif de commande de liaison radio est inférieure et/ou égale à un seuil bas (TL) ; un état haut (BH) dans lequel l'occupation de ladite mémoire tampon de dispositif de commande de liaison radio est supérieure et/ou égale à un seuil haut (TH) ; et un état moyen (BM) dans lequel l'occupation de ladite mémoire tampon de dispositif de commande de liaison radio est située entre lesdits seuils bas et haut.

4. Station de base selon la revendication 3, dans laquelle ledit état comprend, pour ledit état moyen, une indication d'un état immédiatement précédent de ladite mémoire tampon de dispositif de commande de liaison radio.

5. Station de base selon la revendication 3 ou 4, dans laquelle ladite logique d'état permet de transmettre ledit paquet d'indication d'état lorsqu'il est déterminé que ladite mémoire tampon de dispositif de commande de liaison radio est passée dudit état moyen audit état haut et dudit état moyen audit état bas.

6. Station de base selon l'une quelconque des revendications précédentes, dans laquelle ladite logique de protocole de convergence de données en paquet comprend :
une première mémoire tampon (70) permettant de stocker des paquets de données codés délivrés audit dispositif de commande de liaison radio ; et
une deuxième mémoire tampon (90) permettant de stocker des paquets de données qui restent à transmettre audit dispositif de commande de liaison radio, ladite logique de protocole de convergence de données en paquet permettant, en réponse audit paquet d'indication d'état, de commander le fonctionnement desdites première et deuxième mémoires tampon.

7. Station de base selon la revendication 6, dans laquelle ladite logique de protocole de convergence de données en paquet permet, en réponse à la réception dudit paquet d'indication d'état indiquant que ladite mémoire tampon de dispositif de commande de liaison radio est dans ledit état haut, d'empêcher que des paquets de données codés soient transmis audit dispositif de commande de liaison radio et permet à la place de stocker n'importe quels paquets de données codés non transmis dans ladite deuxième mémoire tampon.

8. Station de base selon la revendication 7, dans laquelle ladite logique de protocole de convergence de données en paquet permet, en réponse à la réception dudit paquet d'indication d'état indiquant que ladite mémoire tampon de dispositif de commande de liaison radio est dans ledit état haut pendant une période supérieure à une période prédéterminée, de transmettre un paquet d'interrogation d'état audit dispositif de commande de liaison radio afin de déterminer ledit état de ladite mémoire tampon de dispositif de commande de liaison radio.

9. Station de base selon la revendication 8, dans laquelle ladite logique de protocole de convergence de données en paquet permet, lorsqu'aucune réponse audit paquet d'interrogation d'état n'est reçue pendant une autre période prédéterminée, de transmettre un autre paquet d'interrogation d'état audit dispositif de commande de liaison radio afin de déterminer ledit état de ladite mémoire tampon de dispositif de commande de liaison radio.

10. Station de base selon la revendication 8, dans laquelle ladite logique de protocole de convergence de données en paquet permet, lorsqu'une réponse audit paquet d'interrogation d'état est reçue indiquant que ladite mémoire tampon de dispositif de commande de liaison radio est dans ledit état moyen, de reprendre la transmission de paquets de données codés vers ledit dispositif de commande de liaison radio lorsque ladite indication d'un état immédiatement précédent de ladite mémoire tampon de dispositif de commande de liaison radio indique que ledit état immédiatement précédent était ledit état bas.

11. Station de base selon la revendication 5, dans laquelle ladite logique de protocole de convergence de données en paquet permet, en réponse à la réception dudit paquet d'indication d'état indiquant que ladite mémoire tampon de dispositif de commande de liaison radio est dans ledit état bas, de reprendre la transmission de paquets de données codés vers ledit dispositif de commande de liaison radio.

12. Station de base selon l'une quelconque des revendications précédentes, dans laquelle ledit paquet d'indication d'état code une indication de paquets de données codés reçus par ledit équipement utilisateur.

13. Station de base selon la revendication 12, dans laquelle ladite logique de protocole de convergence de données en paquet permet, en réponse à ladite indication de paquets de données codés reçus par ledit équipement utilisateur, d'éliminer ces paquets de données codés de ladite première mémoire tampon.

14. Procédé de commande de la transmission de paquets de données codés, ledit procédé comprenant les étapes suivantes :
recevoir des paquets de données et générer des paquets de données codés ;
recevoir lesdits paquets de données codés à transmettre à l'équipement utilisateur (20);
stocker dans une mémoire tampon de dispositif de commande de liaison radio (60) ces paquets de données codés reçus qui restent à transmettre audit équipement utilisateur ; et
déterminer un état de ladite mémoire tampon de dispositif de commande de liaison radio et transmettre une indication dudit état dans un paquet d'indication d'état sur un plan d'utilisateur (UPLANE) pour commander la transmission desdits paquets de données codés, dans lequel ledit paquet d'indication d'état comprend un paquet de données d'état de protocole de convergence de données en paquet codant ledit état.

15. Produit de programme informatique permettant, lorsqu'il est exécuté sur un ordinateur, de réaliser les étapes du procédé selon la revendication 14.
